# EUROPEAN PATENT SPECIFICATION

(11) **EP 2 199 115 B1**
(45) Date of publication and mention of the grant of the patent: **08.02.2012**
(21) Application number: 09178614.5
(22) Date of filing: 10.12.2009
(51) Int. Cl.: B60C 19/00

(54) **Pneumatic tire with damping strip**
Pneumatischer Reifen mit Dämpfungsstreifen
Pneu doté d'une bande d'amortissement

(30) Priority: 19.12.2008 US 339644
(43) Date of publication of application: 23.06.2010
(73) Proprietor: The Goodyear Tire & Rubber Company, Akron, OH 44316-0001 (US)
(72) Inventor: Agostini, Giorgio, L-7733, Colmar-Berg (LU); Wieczorek, David Gilbert, 8140, Bridel (LU)
(74) Representative: Kutsch, Bernd

(56) References cited:
- EP-A1- 1 577 123
- EP-A2- 1 574 360
- EP-A2- 1 777 081
- JP-A- 2005 254 924

## Description

### Background of the Invention

Government regulations and consumer preferences continue to compel a reduction in the acceptable noise levels produced from the tires of passenger vehicles. One source of road noise is resonance within the air chamber enclosed by the innermost surface of the tire and the rim. One type of effort to reduce tire noise is damping the sound from the air vibration in the air chamber, which efforts have focused mainly on altering the innermost surface of the tire adjacent the tire carcass. Shortcomings in these previous efforts, as well as new stricter regulations regarding noise reduction, have provided a need for further improvements to the tire to reduce sound transmission due to vibrations within the air chamber.

EP-A-1 777 081 discloses a known pneumatic tire comprising the features of the preamble of claim 1.

### Summary of the Invention

The present invention is directed to a pneumatic tire according to claim 1 and to a method according to claim 9.

Dependent claims refer to preferred embodiments of the invention.

### Brief Description of the Drawing

The invention will be more readily understood with respect to the accompanying drawing showing a cross section of a tire according to one embodiment of the present invention.

### Description of the Invention

In accordance with the present invention, there is provided a pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; and at least one damping strip disposed radially inwardly of the carcass and exposed to the inner cavity of the tire, the damping strip comprising a co-vulcanized rubber composition having a density ranging from 2 to 15 g/cm³.

In one embodiment, the integral damping strip comprises a single circumferential strip and is disposed substantially centered radially on the inner surface of crown section of the tire, and thus exposed to the air cavity. By substantially centered, it is meant that the strip is positioned so as to distribute the load on the tire and thereby minimize interference with dynamic balance. In another embodiment, the integral damping strip comprises multiple circumferential strips disposed symmetrically with respect to the radial centerline of the tire.

The damping strip is co-vulcanized with the tire in order to be integral with the dynamic tire construction. It is built as a solid unvulcanized layer onto the inner portion of the green, unvulcanized tire over a building form and then shaped, molded and heated under pressure to simultaneously co-vulcanize therewith. The pressure is generally supplied by a shaping bladder positioned within the tire to press and shape it outwardly against a mold. Typical vulcanization temperatures range from 90ºC to 200ºC. Thus, the damping strip is formed substantially simultaneously with the co-vulcanization step in order to enhance the integral tire construction. The damping strip itself is therefore integral with the tire construction, instead of being a simple laminate that is glued or otherwise attached to a previously cured tire.

The integral damping strip of the tire is of such a gauge as to not occupy any substantial inner portion of the inflated tire. Generally, its thickness ranges from 1 to 80 and preferably 10 to 50 percent of the total tire thickness, depending somewhat upon the tire size and intended use of the tire. Thus, a typical thickness is in the range of 10 to 30 percent of the total tire thickness for an ordinary passenger pneumatic tire.

In order to obtain an adequate noise dampening effect by the damping strip in the tire, the damping strip has a density in ranges suitable to dampen noise.

In one embodiment, the damping strip has a density ranging from 2 to 15 g/cm³. This density is for the fully loaded compound, including elastomers and additives such as fillers, zinc oxide, curatives and oils. In another embodiment, the damping strip has a density ranging from 2.5 to 10g/cm³.

In order to obtain the required density, the damping strip contains fillers of high specific gravity. In one embodiment, the filler may be one or more of ZnO, Fe₂O₃, Fe₃O₄, Pb₂O₃, PbO, Zr₂O₄, Os₂O₄ and Ba₂SO₄. The filler is not particularly limited, as long as the required density in the damping strip is obtained.

Depending on the specific gravity of the filler used, the amount of filler in the damping strip may vary. In one embodiment, the damping strip comprises from 100 to 500 phr of filler. In another embodiment, the damping strip comprises form 200 to 400 phr of filler.

The vulcanized rubber tire and the co-vulcanized integral damping strip can be of various cured or vulcanized rubbers such as natural rubber and synthetic rubber and their mixtures or blends. For example, they can be rubbery styrene-butadiene copolymers, butadiene-acrylonitrile copolymers, cis-1,4-polyisoprene, polybutadiene, isoprene-butadiene copolymers, butyl rubber, halogenated butyl rubber such as chloro or bromo butyl rubber, ethylene-propylene copolymers, ethylene-propylene-diene terpolymers and polyurethane elastomers. Typically the various polymers are cured or vulcanized by normal curing methods and recipes such as with sulfur, or with peroxides in the case of the ethylene-propylene copolymers, or with primary diamines in the case of polyurethane elastomers. The sulfur cured or vulcanized natural rubber and synthetic rubbery polymers are preferred such as styrene-butadiene rubber, cis-1,4-polyisoprene, polybutadiene, butyl rubber, chlorobutyl rubber, and bromobutyl rubber.

It is readily understood by those having skill in the art that the rubber compositions used in the integral damping strip would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. Typical additions of carbon black comprise 10 to 100 parts by weight per 100 parts by weight of diene rubber (phr), preferably 20 to 40 phr.

A number of commercially available carbon blacks may be used. Included in the list of carbon blacks are those known under the ASTM designations N299, S315, N326, N330, M332, N339, N343, N347, N351, N358, N375, N539, N550 and N582. Processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 80 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to about 3 phr. Typical amounts of zinc oxide comprise 2 to 10 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Preferably, the primary accelerator is a sulfenamide. If a second accelerator is used, the secondary accelerator is preferably a guanidine, dithiocarbamate or thiuram compound.

The tire can be built, shaped, molded and cured by various methods, which will be readily apparent to those having skill in such art. As noted previously herein, the damping strip is co-vulcanized with the tire in order to be integral with the dynamic tire construction. It is built as a solid unvulcanized layer onto the inner portion of the green, unvulcanized tire over a building form and then shaped, molded and heated under pressure to simultaneously co-vulcanize therewith. The pressure is generally supplied by a shaping bladder positioned within the tire to press and shape it outwardly against a mold. Typical vulcanization temperatures range from 90ºC to 200ºC. Thus, the damping strip is formed substantially simultaneously with the co-vulcanization step in order to enhance the integral tire construction. To do this, an unshaped and unvulcanized tire is built around a tire building drum by first building over the drum an inner layer of the high density rubber composition and an innerliner. Over this initial layer of rubber the remainder of the tire is built including the lay-up of the rubberized fabric plies, bead portions, sidewall and tread. The fabricated tire is then removed from the building form and shaped, molded and vulcanized in the tire.

With reference now to the drawing, a perspective view of a portion of a cross-section of a open toroidally shaped rubber tire 1 is shown in which a annular damping strip 2 is positioned on the inner surface 3 of and substantially centered on the crown region of the tire (crown region shown but not numbered) and integral with the inner rubber surface 3 of the pneumatic tire 1.

The damping strip 2 may extend circumferentially about the inside of the tire and only partially across the width of the tire. In one embodiment, the damping strip 2 may extend axially no more than 25 percent of the tread width. In another embodiment, the damping strip 2 may extend axially in a range of from about 5 percent to 20 percent of the tread width. In another embodiment, the damping strip 2 may be substantially centered axially on the axial centerline of the tire. In another embodiment, multiple circumferential damping strips may be used, disposed symmetrically about the radial centerline so as to distribute the load on the tire and minimize interference with dynamic balance.

The practice of this invention is further illustrated by reference to the following examples. Unless otherwise indicated, all parts and percentages are by weight.

### Example 1

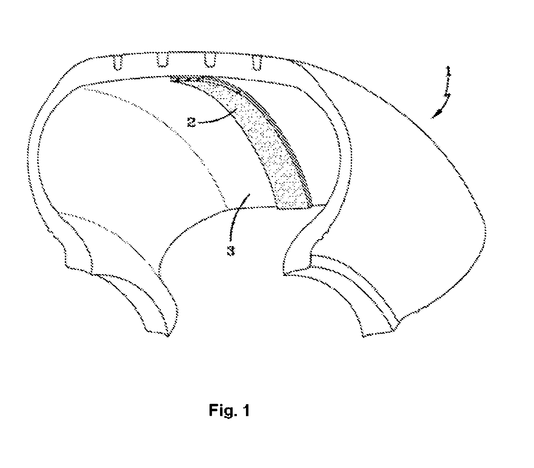

In this example, the effect of adding a damping strip to the inner surface of a tire is modeled. Using a finite element analysis, the frequency shift of the first vertical resonance mode that could be obtained by adding weight in the crown area under the innerliner was quantified. An artificial layer of a damping compound of high density is assumed to simulate the effect of weight (see Fig.1). The first vertical resonance frequency was then estimated using a finite element modal analysis. Results of the finite element analysis are shown in Table 1.

**Table 1. Modeling Results**

| | Control | | | |
|---|---|---|---|---|
| Sample No. | 1 | 2 | 3 | 4 |
| Layer density (g/cm³) | - | 1.1 | 5.5 | 11 |
| Tire mass (Kg) | 12.45 | 12.66 | 13.47 | 14.48 |
| Frequency¹ (Hz) | 113 | 111.2 | 104.7 | 98 |
| Frequency shift² (Hz) | 0 | -1.8 | -8.3 | -15.1 |

| | | | | |
|---|---|---|---|---|
| ¹ First vertical resonance mode (VRM) ² Versus control sample 1 | | | | |

These simulated results show surprisingly and unexpectedly that decrease in the first vertical resonance mode of a tire can be achieved by adding mass on the inner surface of the tire. The simulated frequency decreases proportionally to the mass added in the tread band.

## Claims

1. A pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; and at least one damping strip (2) disposed radially inwardly of the carcass and exposed to the inner cavity of the tire, the damping strip (2) comprising a co-vulcanized rubber composition having a density ranging from 2 to 15 g/cm³.

2. The pneumatic tire of claim 1, wherein the damping strip (2) is disposed substantially centered radially on the inner surface (3) of crown section of the tire (1).

3. The pneumatic tire of claim 1 or 2, wherein the damping strip (2) comprises a plurality of circumferential strips disposed symmetrically with respect to the radial centerline of the tire.

4. The pneumatic tire of at least one of the previous claims, wherein the damping strip (2) has a density ranging from 2.5 to 10 g/cm³.

5. The pneumatic tire wherein the damping strip (2) has a density ranging from 3 to 6 g/cm³

6. The pneumatic tire of at least one of the previous claims, wherein the rubber composition of the damping strip (2) comprises a filler selected from the group consisting of ZnO, Fe₂O₃, Fe₃O₄, Pb₂O₃, PbO, Zr₂O₄, Os₂O₄, and Ba₂SO₄

7. The pneumatic tire of at least one of the previous claims, wherein the damping strip (2) extends axially no more than 25 percent of the tread width.

8. The pneumatic tire of claim 6, wherein the damping strip (2) extends axially in a range of from 5 percent to 20 percent of the tread width.

9. A method of manufacturing a pneumatic tire, the method comprising:
providing a green tire assembly comprising a carcass assembly and an inner cavity;
disposing a green damping strip radially inwardly of the carcass assembly and exposed to the inner cavity;
shaping and vulcanizing the green tire assembly with the green damping strip in a tire mold such that the vulcanized damping strip (2) is co-vulcanized with the vulcanized tire assembly; the vulcanized damping strip (2) having a density ranging from 2 to 15 g/cm³.

## Patentansprüche

1. Luftreifen, umfassend zwei beabstandete unausdehnbare Wülste; einen mit dem Boden in Kontakt kommenden Laufflächenabschnitt; ein Paar individueller Seitenwände, die sich radial einwärts von den axialen Außenrändern des Laufflächenabschnitts erstrecken, um an die jeweiligen Wülste anzuschließen, wobei die axialen Außenränder des Laufflächenabschnitts eine Laufflächenbreite definieren; eine tragende Karkasse für den Laufflächenabschnitt und die Seitenwände; und mindestens einen Dämpfungsstreifen (2), der radial einwärts von der Karkasse angeordnet ist und zu dem inneren Hohlraum des Reifens hin freiliegt, wobei der Dämpfungsstreifen (2) eine co-vulkanisierte Kautschukzusammensetzung mit einer Dichte im Bereich von 2 bis 15 g/cm³ umfasst.

2. Luftreifen nach Anspruch 1, wobei der Dämpfungsstreifen (2) im Wesentlichen radial zentriert auf der Innenfläche (3) des Zenitbereichs des Reifens (1) angeordnet ist.

3. Luftreifen nach Anspruch 1 oder 2, wobei der Dämpfungsstreifen (2) eine Vielzahl umfangsgerichteter Streifen umfasst, die bezüglich der radialen Mittellinie des Reifens symmetrisch angeordnet sind.

4. Luftreifen nach mindestens einem der vorgenannten Ansprüche, wobei der Dämpfungsstreifen (2) eine Dichte im Bereich von 2,5 bis 10 g/cm³ aufweist.

5. Luftreifen, wobei der Dämpfungsstreifen (2) eine Dichte im Bereich von 3 bis 6 g/cm³ aufweist.

6. Luftreifen nach mindestens einem der vorgenannten Ansprüche, wobei die Kautschukzusammensetzung des Dämpfungsstreifens (2) einen Füllstoff umfasst, ausgewählt aus der aus ZnO, Fe₂O₃, Fe₃O₄, Pb₂O₃, PbO, Zr₂O₄, Os₂O₄ und Ba₂SO₄ bestehenden Gruppe.

7. Luftreifen nach mindestens einem der vorgenannten Ansprüche, wobei der Dämpfungsstreifen (2) sich axial über nicht mehr als 25 Prozent der Laufflächenbreite erstreckt.

8. Luftreifen nach Anspruch 6, wobei der Dämpfungsstreifen (2) sich axial in einem Bereich von 5 Prozent bis 20 Prozent der Laufflächenbreite erstreckt.

9. Verfahren zur Herstellung eines Luftreifens, wobei das Verfahren umfasst:
Bereitstellen einer unvulkanisierten Reifenbaugruppe, umfassend eine Karkassenbaugruppe und einen inneren Hohlraum;
Anordnen eines unvulkanisierten Dämpfungsstreifens radial einwärts von der Karkassenbaugruppe und zu dem inneren Hohlraum hin freiliegend;
Formen und Vulkanisieren der unvulkanisierten Reifenbaugruppe mit dem unvulkanisierten Dämpfungsstreifen in einem Reifenformwerkzeug, sodass der vulkanisierte Dämpfungsstreifen (2) mit der vulkanisierten Reifenbaugruppe covulkanisiert wird; wobei der vulkanisierte Dämpfungsstreifen (2) eine Dichte im Bereich von 2 bis 15 g/cm³ aufweist.

## Revendications

1. Bandage pneumatique comprenant deux talons inextensibles espacés ; une portion de bande de roulement qui entre en contact avec le sol ; une paire de flancs individuels qui s'étendent vers l'intérieur en direction radiale à partir des bords externes axiaux de ladite portion de bande de roulement afin de joindre les talons respectifs, les bords externes axiaux de la portion de bande de roulement définissant une largeur de bande de roulement ; une carcasse de support pour la portion de bande de roulement et pour les flancs ; et au moins une bande d'amortissement (2) qui vient se disposer à l'intérieur de la carcasse en direction radiale et qui est exposée à la cavité interne du bandage pneumatique, la bande d'amortissement (2) comprenant une composition de caoutchouc covulcanisé possédant une densité qui se situe dans la plage de 2 à 15 g/cm³.

2. Bandage pneumatique selon la revendication 1, dans lequel la bande d'amortissement (2) est disposée essentiellement en position centrale en direction radiale sur la surface interne (3) de la section de sommet du bandage pneumatique (1).

3. Bandage pneumatique selon la revendication 1 ou 2, dans lequel la bande d'amortissement (2) comprend plusieurs bandes circonférentielles disposées en position symétrique par rapport à la ligne centrale radiale du bandage pneumatique.

4. Bandage pneumatique selon au moins une des revendications précédentes, dans lequel la bande d'amortissement (2) possède une densité qui se situe dans la plage de 2 à 10 g/cm³.

5. Bandage pneumatique, dans lequel la bande d'amortissement (2) possède une densité qui se situe dans la plage de 3 à 6 g/cm³.

6. Bandage pneumatique selon au moins une des revendications précédentes, dans lequel la composition de caoutchouc de la bande d'amortissement (2) comprend une matière de charge choisie parmi le groupe constitué par ZnO, Fe₂O₃, Fe₃O₄, Pb₂O₃, PbO, Zr₂O₄, Os₂O₄ et Ba₂SO₄.

7. Bandage pneumatique selon au moins une des revendications précédentes, dans lequel la bande d'amortissement (2) possède une étendue en direction axiale qui ne représente pas plus de 25 % de la largeur de bande de roulement.

8. Bandage pneumatique selon la revendication 6, dans lequel la bande d'amortissement (2) possède une étendue en direction axiale dans la plage de 5 % à 20 % de la largeur de bande de roulement.

9. Procédé de confection d'un bandage pneumatique, le procédé comprenant le fait de :
procurer un assemblage de bandage pneumatique non vulcanisé comprenant un assemblage de carcasse et une cavité interne ;
disposer une bande d'amortissement non vulcanisée à l'intérieur, en direction radiale, de l'assemblage de carcasse, et l'exposer à la cavité interne ;
façonner et vulcaniser l'assemblage de bandage pneumatique à l'état cru avec la bande d'amortissements à l'état cru dans un moule pour bandage pneumatique de façon à obtenir une covulcanisation de la bande d'amortissement vulcanisée avec l'assemblage de bandage pneumatique vulcanisé, la bande d'amortissement (2) possédant une densité qui se situe dans la plage de 2 à 15 g/cm³.
